# EUROPEAN PATENT SPECIFICATION

(11) **EP 4 243 159 B1**
(45) Date of publication and mention of the grant of the patent: **30.09.2026**
(21) Application number: 22865006.5
(22) Date of filing: 30.08.2022
(51) Int. Cl.: H01M 10/6553, H01M 10/647, H01M 10/653, H01M 10/613, H01M 50/211, H01M 10/6551

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 02.09.2021 KR 20210116870
(43) Date of publication of application: 13.09.2023
(73) Proprietor: LG Energy Solution, Ltd., Seoul 07335 (KR)
(72) Inventor: KIM, Min Seop, Daejeon 34122 (KR); SEONG, Junyeob, Daejeon 34122 (KR); JEON, Jongpil, Daejeon 34122 (KR)
(74) Representative: Plasseraud IP
(86) International application number: PCT/KR2022/012935
(87) International publication number: WO 2023/033504

(56) References cited:
- CN-A- 110 050 382
- CN-A- 110 998 905
- CN-U- 212 725 487
- JP-A- 2005 310 449
- KR-A- 20210 042 710
- KR-A- 20210 064 935
- KR-A- 20210 065 268
- KR-A- 20210 066 528
- US-A1- 2021 367 292
- US-B2- 11 509 015

## Description

### [TECHNICAL FIELD]

The present disclosure relates to a battery module and a battery pack including the same, and more particularly to a battery module having a novel cooling structure and a battery pack including the same.

### [BACKGROUND]

Along with the technology development and increased demand for mobile devices, the demand for batteries as energy sources is increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Small-sized mobile devices use one or several battery cells for each device, whereas middle or large-sized devices such as vehicles require high power and large capacity. Therefore, a middle or large-sized battery module having a plurality of battery cells electrically connected to one another is used.

The middle or large-sized battery module is preferably manufactured so as to have as small a size and weight as possible. Consequently, a prismatic battery, a pouch-shaped battery or the like, which can be stacked with high integration and has a small weight relative to capacity, is mainly used as a battery cell of the middle or large-sized battery module. Such a battery module has a structure in which a plurality of cell assemblies including a plurality of unit battery cells are connected in series to obtain high output. And, the battery cell includes positive electrode and negative electrode current collectors, a separator, an active material, an electrolyte, and the like, and thus can be repeatedly charged and discharged through an electrochemical reaction between components.

Meanwhile, in recent years, as the need for large-capacity structures including their utilization as an energy storage source is growing, there is an increasing demand for battery packs having a multi-module structure formed by assembling a plurality of battery modules in which a plurality of secondary batteries are connected in series and/or in parallel.

Further, when a plurality of battery cells are connected in series or in parallel to configure a battery pack, it is common to configure a battery module composed of at least one battery cell first and then configure a battery pack by using at least one battery module and adding other components.

When the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, a battery module in which a large number of battery cells are stacked, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a middle- or large-sized battery module included in a vehicle battery pack, it is frequently exposed to direct sunlight and may be placed under high-temperature conditions such as summer or desert areas.

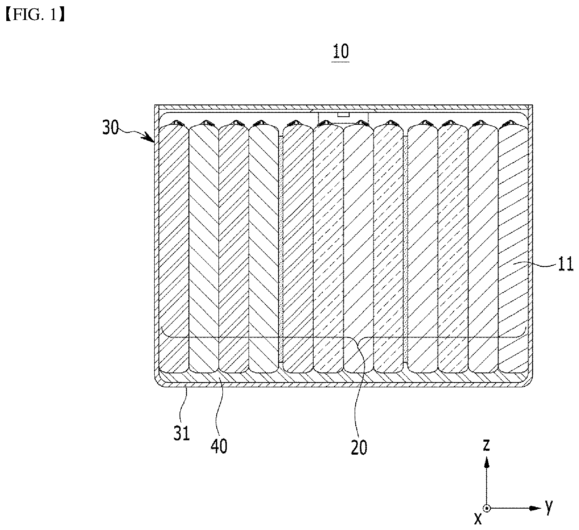

Fig. 1 is a cross-sectional view of a conventional battery module.

Referring to Fig. 1, the conventional battery module 10 includes a battery cell stack 20 in which a plurality of battery cells 11 are stacked, and a module frame 30 that houses the battery cell stack 20. At this time, a thermal conductive resin layer 40 located between the lower part of the battery cell stack 20 and the bottom part 31 of the module frame 30 may be formed.

The conventional battery module allows heat generated in the battery cells 11 to release only through a one-way path passing though the thermal conductive resin layer 40 formed under the battery cell stack 20 and the bottom part 31 of the module frame 30.

However, in recent years, the need for high capacity, high energy, fast charging, and the like is continuously increasing, so that the amount of current flowing through the busbar is increasing and heat generated from the busbar, the battery cell, and the electrode lead tends to increase. Such a heat generation is hard to effectively cool through a conventional cooling structure alone. Therefore, there is a need for a novel structure that can be in direct contact with the battery cell and busbar and enables rapid cooling in order to cool the heat generation.

Documents CN 212 725 487 U and CN 110 050 382 A disclose battery modules with improved thermal management.

### [DETAILED DESCRIPTION OF THE INVENTION]

### [Technical Problem]

It is an object of the present disclosure to provide a battery module that can solve the heat generation problem of a battery cell and a busbar, and a battery pack including the same.

However, the objects of the present disclosure are not limited to the aforementioned objects, and other objects which are not mentioned herein should be clearly understood by those skilled in the art from the following detailed description and the accompanying drawings.

### [Technical Solution]

To this end, the invention provides a battery module according to claim 1.

The battery module after the invention may present one or more feature(s) of dependent claims 2 to 8, in any combination allowed by the claims.

### [Advantageous Effects]

The battery module according to one embodiment of the present disclosure includes a heat transfer member, thereby capable of solving the heat generation problem of battery cells and busbars in high current and fast charging environments. Also, the stability of the battery module may be improved by solving the heat generation problem.

In addition, the heat transfer member fills a space between the battery cell stack and the busbar frame, and a space between the busbar frame and the end plate, thereby capable of achieving the effect of improving the insulating performance of the battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a cross-sectional view of a conventional battery module;
Fig. 2 is an exploded perspective view of a battery module according to an illustrative example;
Fig. 3 is a perspective view showing the battery module of Fig. 2 in which the components are assembled;
Fig. 4 is an enlarged view showing a state cut along a section P1 of Fig. 3;
Fig. 5 is an enlarged view showing a state cut along a section P2 of Fig. 3;
Fig. 6 is a perspective view showing a battery cell included in the battery module after the invention;
Fig. 7 is a cross-sectional view of a battery module according to the invention; and
Fig. 8 is a diagram showing a busbar frame included in a battery module according to another embodiment of the invention.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used to explain various components, but the components should not be limited by the terms. These terms are only used to distinguish one component from the other component.

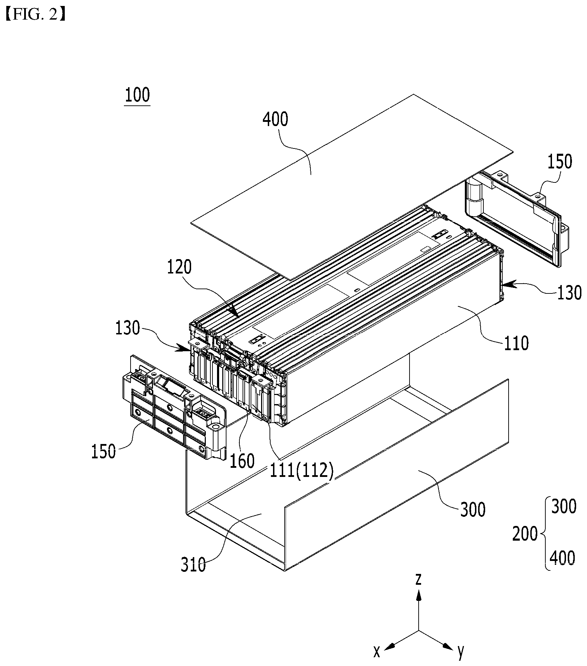

Hereinafter, a battery module according to an embodiment of the present disclosure will be described with reference to Figs. 2 to 6.

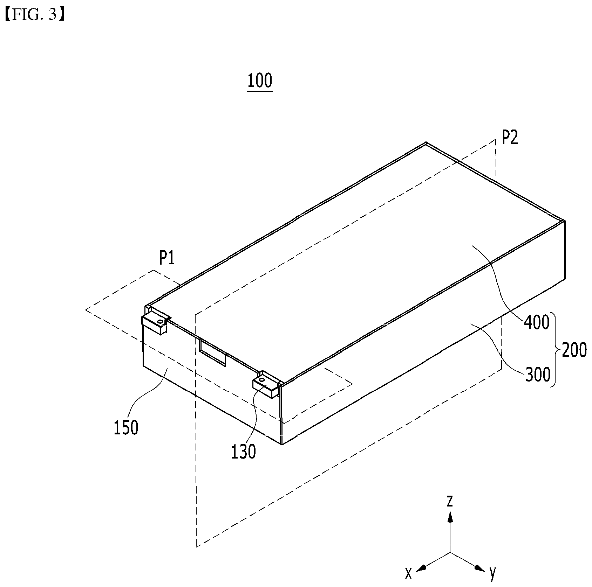

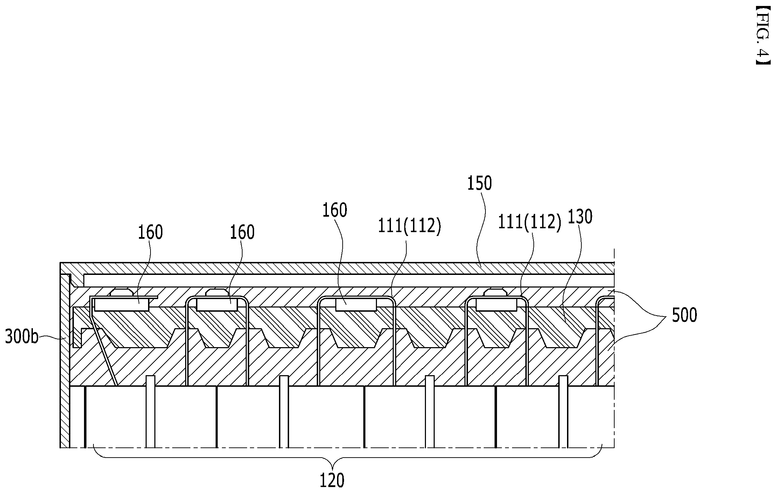

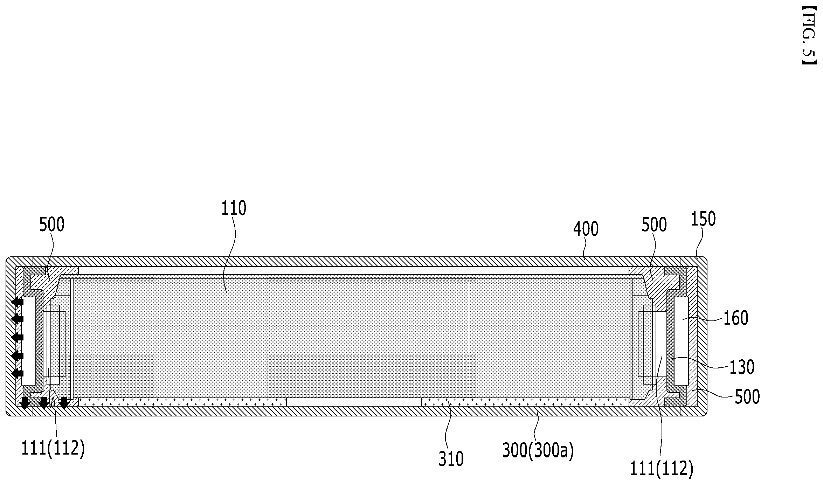

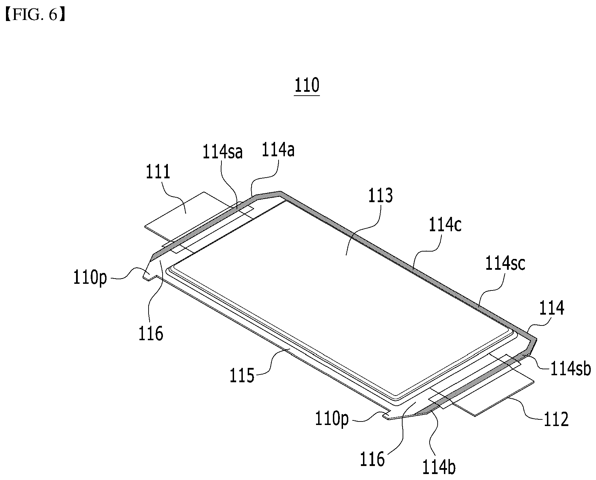

Fig. 2 is an exploded perspective view of the battery module of the present disclosure. Fig. 3 is a perspective view showing a battery module in which the components of Fig. 2 are assembled. Fig. 4 is an enlarged view showing a state cut along a section P1 of Fig. 3. Fig. 5 is an enlarged view showing a state cut along a section P2 of Fig. 3. Fig. 6 is a perspective view showing a battery cell included in the battery module of the present disclosure.

Referring to Figs. 2 and 3, a battery module 100 according to the present embodiment includes a battery cell stack 120 in which a plurality of battery cells 110 are stacked, and a module frame 200 that surrounds the battery cell stack 120.

First, the battery cell 110 is preferably a pouch-type battery cell, and can be formed in a rectangular sheet-like structure. For example, referring to Fig. 6, the battery cell 110 according to the present embodiment has a structure in which two electrode leads 111 and 112 face each other and protrude from one end part 114a and the other end part 114b of the cell main body 113, respectively. That is, the battery cell 110 includes electrode leads 111 and 112 that are protruded in mutually opposite directions. More specifically, the electrode leads 111 and 112 are connected to an electrode assembly (not shown), and are protruded from the electrode assembly (not shown) to the outside of the battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, wherein the sealing parts 114sa, 114sb and 114sc have a structure that is sealed by a method such as heat-sealing, and the remaining other side part may be composed of a connection part 115. The cell case 114 may be composed of a laminated sheet including a resin layer and a metal layer.

Further, the connection part 115 may extend long along one edge of the battery cell 110, and a bat ear 110p may be formed at an end of the connection part 115. Moreover, while the cell case 114 is sealed with the protruding electrode leads 111 and 112 being interposed therebetween, a terrace part 116 may be formed between the electrode leads 111 and 112 and the cell main body 113. That is, the battery cell 110 may include a terrace part 116 formed to extend from the cell case 114 in a direction in which the electrode leads 111 and 112 protrude.

Such a battery cell 110 may be formed in plural numbers, and the plurality of battery cells 110 can be stacked so as to be electrically connected to each other, thereby forming a battery cell stack 120. Particularly, as shown in Fig. 2, a plurality of battery cells 110 may be stacked along the direction parallel to the y-axis. Thereby, the electrode leads 111 and 112 may protrude in the x-axis direction and the -x-axis direction, respectively.

Meanwhile, when charge and discharge of the battery cells 110 are repeatedly performed, heat is generated. Even among them, a great amount of heat generates in a portion adjacent to the electrode leads 111 and 112. That is, as it approaches to the electrode leads 111 and 112 rather than the central portion of the cell main body 113, more heat is generated during the charge and discharge, so that a structure for cooling the corresponding part may be required.

Meanwhile, the module frame 200 may include a frame member 300 which is opened in the upper surface, the front surface and the rear surface thereof and covers the lower part and both side parts of the battery cell stack 120, and an upper plate 400 that covers an upper part of the battery cell stack 120. However, the module frame 200 is not limited thereto, and can be replaced with a frame having another shape such as an L-shaped frame or a mono-frame surrounding the cell stack 120 except the front and rear surfaces. The battery cell stack 120 housed inside the module frame 200 can be physically protected through the module frame 200. At this time, the frame member 300 may include a bottom part 300a that supports the lower part of the battery cell stack 120, and side surface parts 300b each extending upward from both ends of the frame bottom part 300a.

The upper plate 400 may cover the opened upper side surface of the module frame 200. The end plate 150 can cover the front and rear surfaces of the battery cell stack 120 that are opened in the module frame 200. The end plate 150 can be weld-coupled with the front and rear end edges of the upper plate 400 and the front and rear end edges of the module frame 200.

A busbar frame 130 can be formed between the end plate 150 and the front and rear surfaces of the battery cell stack 120. A plurality of busbars 160 mounted on the busbar frame 130 can be formed protrusively from the battery cells 110 to be in contact with the electrode leads 111 and 112 mounted on the busbar frame 130.

Further, the battery module 100 according to the present embodiment further includes a thermal conductive resin layer 310 located between the lower surface of the battery cell stack 120 and the bottom part of the module frame 200, that is, the bottom part 300a of the frame member 300, and the thermal conductive resin layer 310 may play a role of transferring heat generated in the battery cell 110 to the bottom of the battery module 100 and fixing the battery cell stack 120.

The conventional battery module allows heat generated in the battery cells to release through the thermal conductive resin layer formed under the battery cell. However, the thermal conductive resin layer has a problem that it cannot efficiently cool the heat generated from the electrode leads and busbar frames on the front and rear surfaces of the battery cell, and busbars mounted to the busbar frames. Further, in the case of a conventional battery module, a space between the battery cell stack and the busbar frame and a space between the busbar frame and the end plate are formed as empty spaces, which causes a problem that insulation performance deteriorates due to inflow of moisture and foreign matters. Therefore, in situations where the electrode leads and busbars of the battery cells generate high heat in a short period of time due to the flow of high current, such as rapid charging, there is a need for a structure that can effectively cool the heat generation.

Therefore, referring to Figs. 4 and 5, the battery module 100 according to the present embodiment includes a heat transfer member 500 formed in a space between the battery cell stack 120 and the end plate 150. Specifically, the heat transfer member 500 may be formed in a space between the battery cell stack 120 and the busbar frame 130 and a space between the bus bar frame 130 and the end plate 150. Moreover, an insulating cover may be further formed in the space between the busbar frame 130 and the end plate 150, so that the heat transfer member 500 can fill the space between the busbar frame 130 and the insulating cover.

In particular, the heat transfer member 500 may wholly fill the above-mentioned spaces. That is, the heat transfer member 500 may wholly fill the space between the battery cell stack 120 and the busbar frame 130 and the space between the busbar frame 130 and the end plate 150. Therefore, through the heat transfer member 500 filled as a whole, the insulation performance is improved, and the possibility of penetration of moisture and foreign matters is minimized, thus improving the stability of the battery module. When moisture or foreign mattes penetrate from the outside, a short circuit of the busbar 160 and the lifespan of the battery module 100 may be reduced. Therefore, the heat transfer member 500 prevents moisture and foreign substances from penetrating into the battery module and contacting the busbar 160 and the electrode leads 111 and 112, thereby capable of securing the performance of the battery module and improving the stability.

Therefore, as described above, the heat transfer member 500 according to the present embodiment may be in contact with the electrode leads 111 and 112. The electrode leads 111 and 112, which are portions where a large amount of heat is generated in the battery cell 110, are the portions of the battery cell 110 that require the most cooling. However, there is no structure for directly contacting the electrode leads 111 and 112 to form a cooling path, which poses a problem. Thus, in the case of the battery module 100 according to the present embodiment, the heat transfer member 500 allows effective cooling of the electrode leads 111 and112. In particular, the heat transfer member 500 may be in surface contact with the electrode leads 111 and 112, and as the contact area increases, effective cooling can be made by the contact even when a large amount of heat is generated.

Further, the heat transfer member 500 may also be in contact with the busbar 160 and the busbar frame 130. Heat generated from the busbar 160 can be cooled through the heat transfer member 500, and can be rapidly transferred through other components with which the heat transfer member 500 contacts. Further, the heat transfer member 500 is in contact with the plurality of busbars 160 formed in the battery module 100, thereby preventing physical contact between the busbars 160. Therefore, a short circuit caused by the contact between the busbars 160 can be interrupted.

In addition, the heat transfer member 500 may be in contact with the bottom part 300a and the upper plate 400 of the frame member 300. Specifically, referring to Fig. 5, the heat transfer member 500 may be formed so as to be in contact with the bottom part 300a of the frame member 300 and the heat conductive resin layer 310. Further, the heat transfer member 500 may be formed so as to be in contact with the upper plate 400. Therefore, the heat transfer member 500 is in contact with the bottom part 300a of the frame member 300, the heat conductive resin layer 310, and the upper plate 400 to thereby form additional heat transfer paths and transfer and dissipate heat to and from the outside of the module. At this time, the heat transfer member 500 may be in surface contact with the configuration described above. Since the heat transfer member 500 is formed in a shape for filling the space, thereby making surface contact with the components and achieving improved cooling efficiency.

As described above, the heat transfer member 500 according to the present embodiment may be formed so as to be in contact with a plurality of components. In particular, the heat transfer member 500 is in direct contact with the busbar 160 and the electrode leads 111 and 112 that generate a large amount of heat, and immediately transfers the heat generated from the busbar 160 and the electrode leads 111 and 112 through the plurality of components, thereby improving the temperature deviation between the components in the battery module, especially the parts of the battery cell.

At this time, the heat transfer member 500 may be formed of a flowable material. The heat transfer member 500 may include a heat transfer material that is injected and cured. It may contain a gel form that is not completely cured. That is, the heat transfer member 500 may be formed in gel form. As the heat transfer member 500 is formed in gel form, it is possible to secure cooling performance and at the same time, have flowability, thereby coping with changes in some of the components in the battery module. Therefore, the heat transfer member 500 can be moved in a situation such as an air pocket in the battery module, thereby ensuring continuous cooling performance.

In addition, the heat transfer member 500 may be formed of a material having thermal conductivity and may be formed of a material having insulation properties. Therefore, by forming the heat transfer member 500 , it is possible to achieve the effect of improving cooling performance and insulating performance through heat transfer.

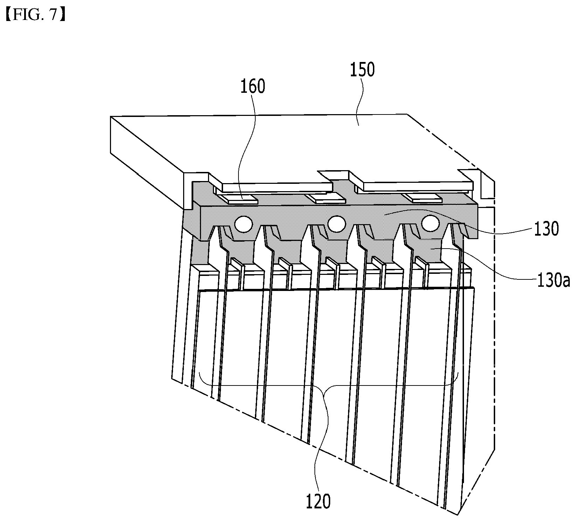

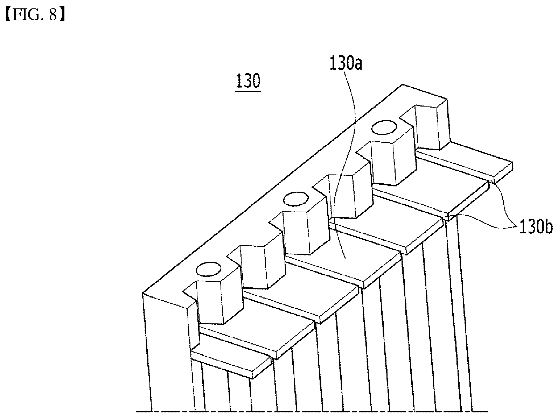

Next, a battery module according to another embodiment of the present disclosure will be described with reference to Figs. 7 and 8. Since there are contents that overlap with those described above, only the portions different from the contents described above will be described.

Fig. 7 is a cross-sectional view of a battery module according to another embodiment of the present disclosure. Fig. 8 is a perspective view showing a busbar frame included in the battery module.

Referring to Figs. 7 and 8, the busbar frame 130 of the battery module 100 according to the present embodiment may include the prevention part 130a protruding in a direction toward the battery cell stack 120. At this time, the heat transfer member 500 may be formed at the lower end of the prevention part 130a so as to be in contact with the prevention part 130a.

As described above, the heat transfer member 500 is formed of a flowable material and thus is movable within the battery module. Therefore, the prevention part 130a may play a role of partially fixing a position where the heat transfer member 500, which is a flowable material, is in contact with the busbar 130 and the electrode leads 111 and 112. Further, the prevention part 130a may prevent the heat transfer member 500 from leaking to the upper part of the prevention part 130a as the heat transfer member 500 moves. Therefore, since the shape and position of the heat transfer member 500 are partially fixed, it is possible to secure and maintain a contact area with the heat generating component, thereby securing cooling performance.

Meanwhile, the busbar frame 130 may further include a groove 130b, and the adjacent prevention parts 130a may be spaced apart from each other by the groove 130b. The groove 130b may be a gap formed to be spaced apart from each other. Thus, the groove 130b may be used as a passage through which the terrace part 116 of the battery cell 110 and the electrode leads 111 and 112 pass.

Next, a battery pack according to another embodiment of the present invention will be described.

The battery pack according to the present embodiment includes the battery module described above. In addition, the battery pack of the present disclosure may have a structure in which one or more of the battery modules according to the present embodiment are gathered, and packed together with a battery management system (BMS) and a cooling device that control and manage battery's temperature, voltage, etc.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

### [Description of Reference Numerals]

100: battery module
110: battery cell
120: battery cell stack
130: busbar frame
150: end plate
160: busbar
200: module frame
300: frame member
400: upper plate
500: heat transfer member

## Claims

1. A battery module (100) comprising:
a battery cell stack (120) in which a plurality of battery cells (110) are stacked,
a module frame (200) that surrounds the battery cell stack (120), and
end plates (150) that cover the front and rear surfaces of the battery cell stack (120) opened in the module frame (200),
wherein the battery module (100) comprises a heat transfer member (500) formed in a space between the battery cell stack (120) and each end plate (150),
wherein the battery module (100) further comprises a busbar frame (130) formed between the front and rear surfaces of the battery cell stack (120) and each end plate (150),
wherein the heat transfer member (500) is formed in a space between the battery cell stack (120) and the busbar frame (130), and in a space between the busbar frame (130) and each end plate (150),
**characterized in that** the busbar frame (130) comprises a prevention part (130a) protruding in a direction toward the battery cell stack (120),
the heat transfer member (500) being formed at a lower end of the prevention part (130a) to be in contact with the prevention part (130a), and
wherein the prevention part (130a) prevents the heat transfer member (500) from flowing out to the upper part of the prevention part (130a),
wherein the heat transfer member (500) is made of a flowable material and the heat transfer member (500) is movable.

2. The battery module (100) according to claim 1 wherein:
the heat transfer member (500) wholly fills a space between the battery cell stack (120) and the busbar frame (130) and a space between the busbar frame (130) and the end plate (150).

3. The battery module (100) according to claim 1, further comprising:
an electrode lead (111, 112) protruding from the battery cell stack (120),
wherein the heat transfer member (500) is in contact with the electrode lead (111, 112).

4. The battery module (100) according to claim 2, comprising:
a plurality of busbars (160) mounted on the busbar frame (130),
wherein the heat transfer member (500) is in contact with the busbar (160) and the busbar frame (130).

5. The battery module (100) according to claim 1 wherein:
the module frame (200) comprises a frame member (300) covering the lower part and both side parts of the battery cell stack (120), and an upper plate (400) covering an upper part of the battery cell stack (120), and
the heat transfer member (500) is in contact with the bottom part of the frame member (300) and the upper plate (400).

6. The battery module (100) according to claim 1 wherein:
the heat transfer member (500) is formed in gel form.

7. The battery module (100) according to claim 1 wherein:
the busbar frame (130) further comprises a groove (130b), and
the adjacent prevention parts (130a) are spaced apart from each other by the groove (130b).

8. A battery pack comprising the battery module (100) as set forth in claim 1.

## Patentansprüche

1. Batteriemodul (100), umfassend:
einen Batteriezellenstapel (120), in dem eine Vielzahl von Batteriezellen (110) gestapelt sind,
einen Modulrahmen (200), der den Batteriezellenstapel (120) umgibt, und
Endplatten (150), die die vorderen und hinteren Oberflächen des Batteriezellenstapels (120) abdecken, die in dem Modulrahmen (200) geöffnet sind,
wobei das Batteriemodul (100) ein Wärmeübertragungselement (500) umfasst, das in einem Raum zwischen dem Batteriezellenstapel (120) und jeder Endplatte (150) ausgebildet ist,
wobei das Batteriemodul (100) ferner einen Sammelschienenrahmen (130) umfasst, der zwischen den vorderen und hinteren Oberflächen des Batteriezellenstapels (120) und jeder Endplatte (150) ausgebildet ist,
wobei das Wärmeübertragungselement (500) in einem Raum zwischen dem Batteriezellenstapel (120) und dem Sammelschienenrahmen (130) und in einem Raum zwischen dem Sammelschienenrahmen (130) und jeder Endplatte (150) ausgebildet ist,
**dadurch gekennzeichnet, dass** der Sammelschienenrahmen (130) ein Verhinderungsteil (130a) umfasst, das in einer Richtung zum Batteriezellenstapel (120) vorsteht,
wobei das Wärmeübertragungselement (500) an einem unteren Ende des Verhinderungsteils (130a) ausgebildet ist, um mit dem Verhinderungsteil (130a) in Kontakt zu stehen, und
wobei das Verhinderungsteil (130a) verhindert, dass das Wärmeübertragungselement (500) zum oberen Teil des Verhinderungsteils (130a) ausfließt,
wobei das Wärmeübertragungselement (500) aus einem fließfähigen Material hergestellt ist und das Wärmeübertragungselement (500) beweglich ist.

2. Das Batteriemodul (100) nach Anspruch 1, wobei:
das Wärmeübertragungselement (500) einen Raum zwischen dem Batteriezellenstapel (120) und dem Sammelschienenrahmen (130) und einen Raum zwischen dem Sammelschienenrahmen (130) und der Endplatte (150) vollständig ausfüllt.

3. Das Batteriemodul (100) nach Anspruch 1, ferner umfassend:
eine Elektrodenleitung (111, 112), die aus dem Batteriezellenstapel (120) herausragt,
wobei das Wärmeübertragungselement (500) mit der Elektrodenleitung (111, 112) in Kontakt steht.

4. Das Batteriemodul (100) nach Anspruch 2, umfassend:
eine Vielzahl von Sammelschienen (160), die an dem Sammelschienenrahmen (130) montiert sind,
wobei das Wärmeübertragungselement (500) mit der Sammelschiene (160) und dem Sammelschienenrahmen (130) in Kontakt steht.

5. Das Batteriemodul (100) nach Anspruch 1, wobei:
der Modulrahmen (200) ein Rahmenelement (300) umfasst, das den unteren Teil und beide Seitenteile des Batteriezellenstapels (120) abdeckt, und eine obere Platte (400), die einen oberen Teil des Batteriezellenstapels (120) abdeckt, und
das Wärmeübertragungselement (500) mit dem unteren Teil des Rahmenelements (300) und der oberen Platte (400) in Kontakt steht.

6. Das Batteriemodul (100) nach Anspruch 1, wobei:
das Wärmeübertragungselement (500) in Gelform ausgebildet ist.

7. Das Batteriemodul (100) nach Anspruch 1, wobei:
der Sammelschienenrahmen (130) ferner eine Nut (130b) umfasst, und
die benachbarten Verhinderungsteile (130a) durch die Nut (130b) voneinander beabstandet sind.

8. Ein Batteriepack, umfassend das Batteriemodul (100) wie in Anspruch 1 dargelegt.

## Revendications

1. Module de batterie (100) comprenant :
un empilement de cellules de batterie (120) dans lequel une pluralité de cellules de batterie (110) sont empilées,
un cadre de module (200) qui entoure l'empilement de cellules de batterie (120), et
des plaques d'extrémité (150) qui couvrent les surfaces avant et arrière de l'empilement de cellules de batterie (120) ouvertes dans le cadre de module (200),
dans lequel le module de batterie (100) comprend un élément de transfert de chaleur (500) formé dans un espace entre l'empilement de cellules de batterie (120) et chaque plaque d'extrémité (150),
dans lequel le module de batterie (100) comprend en outre un cadre de barre omnibus (130) formé entre les surfaces avant et arrière de l'empilement de cellules de batterie
(120) et chaque plaque d'extrémité (150),
dans lequel l'élément de transfert de chaleur (500) est formé dans un espace entre l'empilement de cellules de batterie (120) et le cadre de barre omnibus (130), et dans un espace entre le cadre de barre omnibus (130) et chaque plaque d'extrémité (150),
**caractérisé en ce que** le cadre de barre omnibus (130) comprend une partie de prévention (130a) faisant saillie dans une direction vers l'empilement de cellules de batterie (120),
l'élément de transfert de chaleur (500) étant formé à une extrémité inférieure de la partie de prévention (130a) pour être en contact avec la partie de prévention (130a), et
dans lequel la partie de prévention (130a) empêche l'élément de transfert de chaleur (500) de s'écouler vers la partie supérieure de la partie de prévention (130a),
dans lequel l'élément de transfert de chaleur (500) est fait d'un matériau fluide et l'élément de transfert de chaleur (500) est mobile.

2. Le module de batterie (100) selon la revendication 1, dans lequel :
l'élément de transfert de chaleur (500) remplit entièrement un espace entre l'empilement de cellules de batterie (120) et le cadre de barre omnibus (130) et un espace entre le cadre de barre omnibus (130) et la plaque d'extrémité (150).

3. Le module de batterie (100) selon la revendication 1, comprenant en outre :
une languette d'électrode (111, 112) faisant saillie de l'empilement de cellules de batterie (120),
dans lequel l'élément de transfert de chaleur (500) est en contact avec la languette d'électrode (111, 112).

4. Le module de batterie (100) selon la revendication 2, comprenant :
une pluralité de barres omnibus (160) montées sur le cadre de barre omnibus (130),
dans lequel l'élément de transfert de chaleur (500) est en contact avec la barre omnibus (160) et le cadre de barre omnibus (130).

5. Le module de batterie (100) selon la revendication 1, dans lequel :
le cadre de module (200) comprend un élément de cadre (300) couvrant la partie inférieure et les deux parties latérales de l'empilement de cellules de batterie (120), et une plaque supérieure (400) couvrant une partie supérieure de l'empilement de cellules de batterie (120), et
l'élément de transfert de chaleur (500) est en contact avec la partie inférieure de l'élément de cadre (300) et la plaque supérieure (400).

6. Le module de batterie (100) selon la revendication 1, dans lequel :
l'élément de transfert de chaleur (500) est formé sous forme de gel.

7. Le module de batterie (100) selon la revendication 1, dans lequel :
le cadre de barre omnibus (130) comprend en outre une rainure (130b), et
les parties de prévention adjacentes (130a) sont espacées l'une de l'autre par la rainure (130b).

8. Bloc-batterie comprenant le module de batterie (100) tel que défini dans la revendication 1.
